# EUROPÄISCHE PATENTSCHRIFT

(11) **EP 0 507 117 B1**
(45) Veröffentlichungstag und Bekanntmachung des Hinweises auf die Patenterteilung: **04.12.1996**
(21) Anmeldenummer: 92104130.7
(22) Anmeldetag: 11.03.1992
(51) Int. Cl.: C08L 55/02

(54) **ABS-Formmassen mit bimodaler Kautschukpartikelgrössenverteilung**
ABS-moulding materials with bimodal distribution of rubber particle sizes
Matières de moulage ABS à répartition bimodale des dimensions des particules de caoutchouc

(30) Priorität: 30.03.1991 DE 4110459
(43) Veröffentlichungstag der Anmeldung: 07.10.1992
(73) Patentinhaber: BASF Aktiengesellschaft, 67063 Ludwigshafen (DE)
(72) Erfinder: Baumgartner, Ehrenfried, Dr., W-6701 Roedersheim-Gronau (DE); Hofmann, Jürgen, W-6700 Ludwigshafen (DE); Jung, Rudolf, H,. Dr., W-6520 Worms 1 (DE); Moors, Rainer, Dr., W-6703 Limburgerhof (DE); Schaech, Hansjoerg, W-6700 Ludwigshafen (DE)

(56) Entgegenhaltungen:
- EP-A- 0 412 801
- EP-A- 0 474 618

## Beschreibung

Die Erfindung beschreibt eine ABS-Formmasse mit bimodaler Verteilung der Kautschukpartikelgröße, deren Kautschukphasen ausschließlich in Lösungs- oder Massepolymerisation hergestellt werden.

ABS-Formmassen mit bimodaler Kautschukpartikelgrößenverteilung sind bekannt. In der Regel wird dabei mindestens eine Kautschukphase in Emulsionspolymerisation hergestellt, was u.a. in den nachstehenden Druckschriften beschrieben ist.
(1) DE-A-1 745 098 (7) US-A-4 740 560
(2) DE-A-1 900 134 (8) EP-A-0 190 884
(3) US-A-3 903 199 (9) US-A-3 243 481
(4) US-A-3 903 200 (10) US-A-4 252 911
(5) US-A-3 931 356 (11) EP-A- 103 657
(6) US-A-4 713 420 (12) EP-A- 412801

Es ist bekannt, daß Mischungen aus gepfropften Kautschuken und Styrol-Acrylnitril-Copolymeriaten zu Formmassen führen, die erwünschte Eigenschaften haben, insbesondere hinsichtlich der Zähigkeit und der chemischen Beständigkeit, dabei aber gut verformbar sind. Durch eine Erhöhung der Kautschukanteile kann man im allgemeinen die Zähigkeit erhöhen, doch führt die Erhöhung des Kautschukanteils meistens zu einer Verschlechterung anderer Eigenschaften, beispielsweise zu einer Herabsetzung des Glanzes. Neben der Kautschukkonzentration beeinflussen vor allem die Kautschukmorphologie und die Größe der Kautschukpartikel die Eigenschaften von ABS-Formmassen. Kautschukpartikel mit einem durchschnittlichen Durchmesser von mehr als 500 nm erhöhen vor allem die Zähigkeit der Produkte, reduzieren aber gleichzeitig den Oberflächenglanz. Kautschukpartikel mit einem Durchmesser weniger als 500 nm ergeben hochglänzende ABS-Produkte, haben aber eine geringere Zähigkeit als ABS-Produkte mit größeren Kautschukpartikeln, wenn der gleiche Kautschukanteil in der Formmasse zugrundegelegt wird.

Ähnlich beeinflußt die individuelle Struktur der Kautschukpartikel die physikalischen Eigenschaften der ABS-Formmassen. Im allgemeinen gibt es zwei Typen von Kautschukpartikeln: In Lösung oder Masse polymerisierte und durch Ausfällen gewonnene Kautschukpartikel und in Emulsion polymerisierte Kautschukpartikel. Diese werden als LABS-Partikel bzw. als EABS-Partikel bezeichnet; eine Beschreibung der Herstellung ist in den Druckschriften (1) bzw. (2) zu finden.

Die in (1) beschriebenen LABS-Partikel enthalten im Kautschuk Einschlüsse der polymeren Matrix und werden üblicherweise in einer Masse-, Masse-Suspensions- oder Lösungspolymerisation gebildet und gepfropft. Diese Prozesse gehen von einem vorgebildeten (Grund-)kautschuk aus, der in den Monomeren und gegebenenfalls dem Lösungsmittel gelöst und dann der Polymerisation unterworden wird, wobei sich während der Phaseninversion die LABS-Partikel ausbilden.

Üblicherweise sind die auf diese Art erhaltenen Kautschukpartikel größer als 500 nm und erniedrigen den Oberflächenglanz von ABS-Formmassen (9-11).

Die in (2) genannten EABS-Partikel sind im allgemeinen kleine feste Kautschukpartikel. Kautschukpartikel mit dieser Struktur werden üblicherweise in einem Emulsionsprozeß gebildet und gepfropft. Die Kautschukpartikel werden durch Polymerisation von z.B. Butadien in einer wäßrigen Phase unter Zuhilfenahme von geeigneten Emulgatoren hergestellt. Der wäßrige Kautschuklatex wird dann mit den Monomeren gepfropft, die auch in der Matrix enthalten sind, wobei die Vorstellung besteht, daß die physikalische Verschlaufung der Pfropfäste mit den Matrixpolymeren eine gute verbindung der Zäh- und Hartphase bewirkt, was für die Zähigkeit der ABS-Formmassen entscheidend ist. Die auf diese Art hergestellten Kautschukpartikel haben in der Regel einen Teilchendurchmesser von unter 500 nm und liefern in ABS-Fertigteilen hochglänzende Oberflächen.

Aus (12) ist es bekannt, Formmassen auf der Grundlage von kautschukmodifizierten Styrolpolymerisaten herzustellen, deren Kautschukteilchen eine sog. bimodale Verteilung der Teilchengröße zwischen 0,05 und 1,5 µm einerseits und 0,7 und 10 µm andererseits aufweisen sollen. Praktisch werden nach (12) jedoch ABS-Formmassen mit kleineren Teilchen lediglich um 0,5 und größeren Teilchen zwischen 0,8 und 2,1 µm erhalten. Die relativ kleinen Teilchen (0,2 bis 1,0 µm) im Falle des HIPS konnten nur deshalb erzielt werden, weil bei deren Herstellung ein Styrol-Butadien-Blockcopolymerisat als Grundkautschuk verwendet wurde, mit dem die Herstellung solch kleiner Teilchen möglich ist. Bei der Herstellung von ABS kann von dieser Maßnahme kein Gebrauch gemacht werden, weil es keine entsprechenden Styrol/Acrylnitril-Butadien-Blockcopolymerisate gibt.

Um ABS-Formmassen mit einem günstigen Eigenschaftsbild hinsichtlich Zähigkeit und Oberflächenglanz zu erhalten, wurden deshalb Abmischungen verschiedener Pfropfkautschuke mit stärker unterschiedlichen Kautschukteilchengrößen vorgenommen; in den eingangs angegebenen Druckschriften ist dies mehrfach beschrieben. Dabei fällt auf, daß bei allen bekannten Abmischungen zumindest ein Pfropfkautschuk aus in Emulsionspolymerisation hergestellten EABS-Partikeln besteht. Bedingt durch die während der Emulsionspolymerisation benötigten Hilfsstoffe besitzen jedoch in Emulsionspolymerisation hergestellte ABS-Formmassen eine stärkere Eigenfarbe als die in Lösungspolymerisation hergestellten ABS-Produkte, so daß auch entsprechende bimodale Abmischungen stärker gefärbt sind als nur in Lösung erhaltene ABS-Produkte.

Aufgabe der Erfindung ist die Schaffung von ABS-Produkten mit einem günstigen Verhältnis von Zähigkeit und Glanz und mit einer hellen Eigenfarbe, wie sie von reinem Lösungs-ABS bekannt ist.

Unmittelbarer Erfindungsgegenstand ist eine kautschukmodifizierte, schlagzähe Formmasse, enthaltend, bezogen auf die Summe aus A, B1 und B2,
- A:: 70 bis 98 Gew.-% einer Polymermatrix A, gebildet durch radikalisch ausgelöste Polymerisation eines Gemisches, das 60 bis 90 Gew.-% Styrol und 10 bis 40 Gew.-% Acrylnitril und
- B1:: 1 bis 29 Gew.-% eines teilchenförmigen, in der Matrix verteilten ersten Pfropfcopolymerisats B1 aus einer Pfropfgrundlage aus Polybutadien und Pfropfästen aus einem Copolymerisat aus Styrol und Acrylnitril mit einer durchschnittlichen Teilchengröpe von etwa 100 bis 500 nm, wobei 500 nm ausgenommen ist und
- B2:: 1 bis 29 Gew.-% eines teilchenförmigen, in der Matrix verteilten zweiten Pfropfcopolymerisats B2 aus einer Pfropfgrundlage aus Polybutadien und Pfropfästen aus einem Copolymerisat aus Styrol und Acrylnitril mit einer durchschnittlichen Teilchengröße von 600 bis 10 000 nm, wobei beide Pfropfcopolymerisate in Lösungs- und/oder Massepolymerisation herstellt und in üblicher Weise in die Polymermatrix eingearbeitet worden sind.

Lösungs-ABS mit Kautschukpartikeln, deren Durchmesser kleiner als 500 nm ist, können z.B. dadurch erhalten werden, daß die Polymerisation in mehreren hintereinandergeschalteten, im wesentlichen rückvermischungsfrei arbeitenden Rohrreaktoren vorgenommen wird, wobei in einem der Reaktoren Phaseninversion auftritt. Dabei soll die Reaktionstemperatur bis zur Phaseninversion bei 90°C oder weniger stattfinden und entsprechend leicht zerfallende Radikalinitiatoren (z.B. tert-Butylperester) verwendet werden.

Einzelheiten sind der EP-A-477 764 zu entnehmen.

Die Herstellung von grobteiligem Lösungs-ABS mit Teilchendurchmessern bis 10 000 nm ist allgemein bekannt und z.B. den eingangs genannten Druckschriften zu entnehmen.

Die beiden Pfropfcopolymerisate B1 und B2 sind in der Polymermatrix im allgemeinen in einem solchen Verhältnis enthalten, daß das Gewichtsverhältnis der jeweiligen Polybutadienanteile 60:40 bis 99:1 beträgt, wobei der Gesamtgehalt an Polybutadien, bezogen auf die Polymermatrix, z.B. 5 bis 30 Gew.-% beträgt.

Vorteilhaft wird als Kautschuk-Pfropfgrundlage ein anionisch polymerisiertes Polybutadien verwendet. Es ist auch möglich, daß das Polybutadien während der Lösungs- oder Massepolymerisation gepfropft wird.

Die erfindungsgemäßen Formmassen können z.B. durch Mischung in der Schmelze - gegebenenfalls hergestellt aus bereits vorhandenen Granulaten - aus zwei jeweils für sich in Lösung oder Masse polymerisierten ABS-Formmassen erhalten werden, von denen die erste Kautschukpartikel einer mittleren Teilchengröße von 100 bis 500 nm, wobei 500 nm ausgenommen ist und die zweite Kautschukpartikel einer mittleren Teilchengröße von 600 bis 10.0000 nm enthält. Es ist natürlich ohne weiteres möglich, der erfindungsgemäßen Formmasse einen weiteren verträglichen Matrixbestandteil (D) zuzumischen.

Weitere Polymere, die mit den vorstehend beschriebenen Lösungs-ABS-Produkten abgemischt werden können, sind z.B. Polystyrolacrylnitril und/oder Polymethylmethacrylat. Beide Polymere werden ebenfalls nach einem Lösungs- oder Massepolymerisationsverfahren hergestellt. Das Polystyrolacrylnitril hat einen Acrylnitrilgehalt zwischen 10 und 40 Gew.-% Polymethylmethacrylat oder Copolymere von Methylmethacrylat mit anderen Acrylestern bis zu einem Acrylesteranteil von etwa 20 Gew.-% können ebenfalls verwendet werden.

Die nach dem erfindungsgemäßen Verfahren erhaltenen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Formteile durch Spritzgießen hergestellt.

Die in den Beispielen aufgeführten Produkteigenschaften wurden wie folgt gemessen:
- Die mittlere Teilchengröße der Weichkomponentenphase wird durch Auswertung elektronenmikroskopischer Aufnahmen ermittelt.
   Die mittlere Teilchengröße wird als d₅₀-Wert (Volumenmedianwert) angegeben.
- Der Oberflächenglanz wurde mit einem Dr. Lange, Labor-Reflektometer nach DIN 67 530 an den Seitenflächen von spritzgegossenen Testkästchen gemessen. Abweichend von DIN 67 530 wurde der Meßwinkel auf 55,8° eingestellt. Die Testkästchen haben eine Länge von 11 cm, eine Breite von 4,3 cm und eine Höhe von 5 cm. Die Testkästchen wiegen ca. 26 bis 27 g. Die Spritzgußbedingungen zur Herstellung der Testkästchen sind in den Beispielen angegeben.
- Der Yellowness-Index (Gelbwert) wurde an bei 230°C spritzgegossenen 1 mm dicken Rundscheiben gemessen. Zur Messung wurde ein Farbmeßgerät DMC25 der Firma Zeiss benutzt. Es wurde Tageslicht (Normalart D 65; Bedingung 1) als Sender und das menschliche Auge (10-Grad-Normbeoachter als Bedingung 2) als Empfänger angenommen.
- Die Kerbschlagzähigkeit wird an bei 230°C spritzgegossenen Formkörpern nach DIN 53 453 gemessen.
- Die Viskositätszahl der Polystyrolacrylnitrilmatrix wurde nach der Trennung von der Kautschukphase als 0,5 %ige Lösung in Dimethylformamid gemessen.

### Beispiel 1 - 8

Als Lösungs-ABS mit großen Kautschukpartikeln wurde ein Produkt (G) verwendet, das folgende Eigenschaften hatte:

| | |
|---|---|
| Kautschukpartikelgröße d₅₀ | 2,0 µm |
| Kautschukgehalt (Buna® HX 500) | 17,0 Gew.-% |
| Viskositätszahl der PSAN-Matrix | 81,2 ml/g |
| Styrolgehalt der PSAN-Matrix | 75,0 Gew.-% |
| Acrylnitril der PSAN-Matrix | 25,0 Gew.-% |
| Oberflächenglanz (Bedingung 1) | 57 % |
| Oberflächenglanz (Bedingung 2) | 23 % |

Als Lösungs-ABS mit kleinen Kautschukpartikeln wurde ein Produkt (F) verwendet, das nach dem Beispiel 1 der EP-A-477764 erhalten worden war und folgende Eigenschaften hatte:

| | |
|---|---|
| Kautschukpartikelgröße d₅₀ | 0,3 µm |
| Kautschukgehalt (Buna® HX 500) | 17,0 Gew.-% |
| Viskositätszahl der PSAN-Matrix | 80,1 ml/g |
| Styrolgehalt der PSAN-Matrix | 75,0 Gew.-% |
| Acrylnitril der PSAN-Matrix | 25,0 Gew.-% |
| Oberflächenglanz (Bedingung 1) | 70 % |
| Oberflächenglanz (Bedingung 2) | 46 % |

Die beiden Lösungs-ABS-Produkte wurden als Granulat im angegebenen Gewichtsverhältnis miteinander gemischt, gemeinsam extrudiert und als abgemischtes Produkt granuliert.

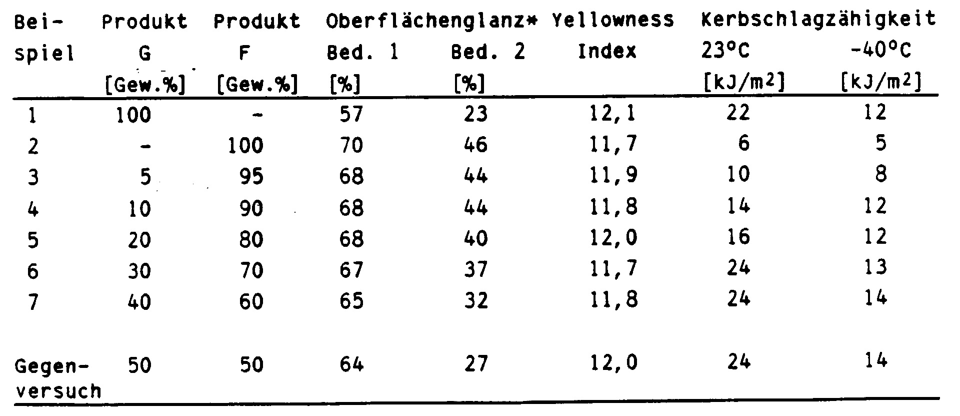

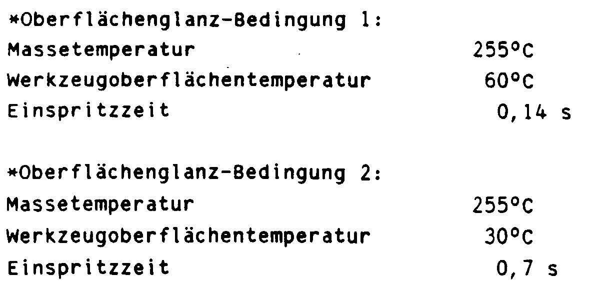

Die im Gegenversuch erhaltene Formmasse genügt nicht mehr den Anforderungen an den Oberflächenglanz, die gestellt werden.

### Vergleichsversuche 1 - 8

Als Lösungs-ABS mit großen Kautschukpartikeln wurde das Produkt G verwendet.

Als Emulsions-ABS mit kleinen Kautschukpartikeln wurde ein Produkt (E) verwendet, das folgende Eigenschaften hatte:

| | |
|---|---|
| Kautschukpartikelgröße d₅₀ | 0,3 µm |
| Kautschukgehalt (Polybutadien) | 17,0 Gew.-% |
| Viskositätszahl der PSAN-Matrix | 80,7 ml/g |
| Styrolgehalt der PSAN-Matrix | 75,0 Gew.-% |
| Acrylnitrilgehalt der PSAN-Matrix | 25,0 Gew.-% |
| Oberflächenglanz (Bedingung 1) | 68 % |
| Oberflächenglanz (Bedingung 2) | 47 % |

Es wurde folgendermaßen hergestellt:

Durch Polymerisation von 62 Teilen Butadien in Gegenwart einer Lösung von 0,6 Teilen tert.-Dodecylmercaptan, 0,7 Teilen C₁₄-Na-Alkylsulfonat als Emulgator, 0,2 Teilen Kaliumperoxodisulfat und 0,2 Teilen Natriumpyrophosphat in 80 Teilen Wasser wurde bei 25°C ein Polybutadienlatex hergestellt. Der Umsatz betrug 99 %. Es wurde ein Polybutadien erhalten, dessen mittlere Teilchengröße bei 100 nm liegt. Der erhaltene Latex wurde durch Zusatz von 25 Teilen einer Emulsion eines Copolymeren aus 96 Teilen Ethylacrylat und 4 Teilen Methacrylsäureamid mit einem Feststoffgehalt von 10 Gew.-% agglomeriert, wobei eine mittlere Teilchengröpe von 300 nm erzielt wurde. Nach Zusetzen von 40 Teilen Wasser, 0,4 Teilen Na-C₁₄-Alkylsulfonat und 0,2 Teilen Kaliumperoxodisulfat wurden 38 Teile einer Mischung aus Styrol und Acrylnitril im Verhältnis 70:30 innerhalb von 4 Stunden zugeführt und bei 75°C polymerisiert. Der Umsatz, bezogen auf Styrol-Acrylnitril, war praktisch quantitativ. Die erhaltene Pfropfkautschukdispersion wurde mittels Calciumchloridlösung gefällt und mit destilliertem Wasser gewaschen. Das noch feuchte Produkt wurde auf einem Zweischneckenextruder unter Entgasung bei 280°C mit Polystyrolacrylnitril (VZ = 80,7 l/g; AN-Gehalt = 25 Gew.-%) so abgemischt, daß das resultierende ABS 17 Gew.-% Polybutadien enthielt.

Lösungs-ABS-Produkt G wurde mit dem Emulsions-ABS-Produkt E als Granulat im angegebenen Gewichtsverhältnis gemischt, gemeinsam im Extruder bei 280°C aufgeschmolzen, vermischt und als abgemischtes Produkt granuliert. Die Eigenschaften der erhaltenen Mischungen sind in den folgenden Vergleichsversuchen zusammengefaßt:

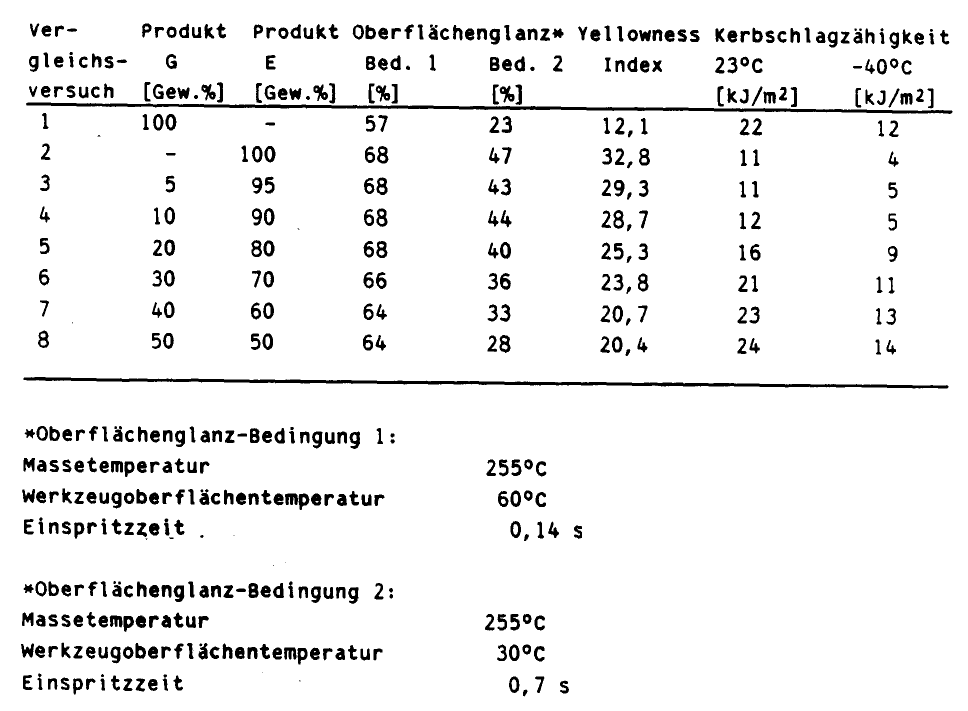

Die im Vergleichsversuch erhaltenen Produkte sind tiefer gelb gefärbt als die in den erfindungsgemäßen Beispielen erhaltenen ABS-Produkte.

## Patentansprüche

1. Kautschukmodifizierte, schlagzähe Formmasse, enthaltend, bezogen auf die Summe aus A, B1 und B2,
A: 70 bis 98 Gew.-% einer Polymermatrix A, gebildet durch radikalisch ausgelöste Polymerisation eines Gemisches aus 60 bis 90 Gew.-% Styrol und 10 bis 40 Gew.-% Acrylnitril und
B1: 1 bis 29 Gew.-% eines teilchenförmigen, in der Matrix verteilten ersten Pfropfcopolymerisats B1 aus einer Pfropfgrundlage aus Polybutadien und Pfropfästen aus einem Copolymerisat aus Styrol und Acrylnitril mit einer durchschnittlichen Teilchengröße von etwa 100 bis 500 nm, wobei 500 nm ausgenommen ist und
B2: 1 bis 29 Gew.-% eines teilchenförmigen, in derMatrix verteilten zweiten Pfropfcopolymerisats B2 aus einer Pfropfgrundlage aus Polybutadien und Pfropfästen aus einem Copolymerisat aus Styrol und Acrylnitril mit einer durchschnittlichen Teilchengröße von 600 bis 10000 nm,
mit der Maßgabe, daß beide Pfropfcopolymerisate B1 und B2 in Masse oder Lösung hergestellt und in üblicher Weise in die Polymermatrix eingearbeitet worden sind und bei der Bildung des Pfropfcopolymerisats B1 bis zur Phaseninversion unter Verwendung entsprechend leicht zerfallender Radikalinitiatoren eine Reaktionstemperatur unter 90 °C eingehalten worden ist.

2. Formmasse nach Anspruch 1, dadurch gekennzeichnet, daß die beiden Pfropfcopolymerisate B1 und B2 in einem Mengenverhältnis vorhanden sind, das einem Gewichtsverhältnis ihres jeweiligen Polybutadienanteils von 60:40 bis 99:1 entspricht.

3. Formmasse nach Anspruch 1, dadurch gekennzeichnet, daß der Gesamtgehalt an Polybutadien zwischen 5 bis 30 Gew.-%, bezogen auf die Polymermatrix, beträgt.

4. Formmasse nach Anspruch 1, enthaltend mindestens einen weiteren verträglichen Matrixbestandteil D.

5. Formmasse nach Anspruch 1, dadurch gekennzeichnet, daß die Pfropfgrundlage des Kautschuks ein anionisch polymerisiertes Polybutadien ist.

6. Formmasse nach Anspruch 1, dadurch gekennzeichnet, daß das Polybutadien während der Lösungs- oder Massepolymerisation der Polymermatrix gepfropft ist.

7. Verfahren zur Herstellung von Formmassen nach Anspruch 1, dadurch gekennzeichnet, daß zwei jeweils für sich in Lösung oder Masse polymerisierte ABS-Formmassen, von denen die erste Kautschukpartikel einer durchschnittlichen Teilchengröße von 100 bis 500, wobei 500 nm ausgenommen ist und die zweite Kautschukpartikel einer durchschnittlichen Teilchengröße von 600 bis 10000 nm enthält, in der Schmelze miteinander vermischt werden.

8. Verfahren nach Anspruch 7, dadurch gekennzeichnet, daß zwei jeweils in Lösung oder Masse polymerisierte ABS-Formmassen als Granulat vermischt und gemeinsam aufgeschmolzen werden.

## Claims

1. A rubber-modified, impact-resistant molding material containing, based on the sum of A, B1 and B2,
A: from 70 to 98% by weight of a polymer matrix A formed by free radical polymerization of a mixture of from 60 to 90% by weight of styrene and from 10 to 40% by weight of acrylonitrile,
B1: from 1 to 29% by weight of a particulate, first graft copolymer B1 which is distributed in the matrix A and consists of a grafting base of polybutadiene and grafts of a copolymer of styrene and acrylonitrile having a mean particle size of about 100-500 nm, but not 500 nm, and
B2: from 1 to 29% by weight of a particulate, second graft copolymer B2 distributed in the matrix and consisting of a grafting base of polybutadiene and grafts of a copolymer of styrene and acrylonitrile having a mean particle size of from 600 to 10,000 nm,
with the proviso that both graft copolymers B1 and B2 have been prepared by mass or solution polymerization and have been incorporated in the polymer matrix in a conventional manner and during the formation of the graft copolymer B1 a reaction temperature of less than 90°C has been maintained up to phase inversion using appropriately readily decomposing free radical initiators.

2. A molding material as claimed in claim 1, wherein the two graft copolymers B1 and B2 are present in a quantity ratio which corresponds to a weight ratio of their particular polybutadiene contents of from 60 : 40 to 99 : 1.

3. A molding material as claimed in claim 1, wherein the total content of polybutadiene is from 5 to 30% by weight, based on the polymer matrix.

4. A molding material as claimed in claim 1, containing one or more further compatible matrix components D.

5. A molding material as claimed in claim 1, wherein the grafting base of the rubber is a polybutadiene prepared by anionic polymerization.

6. A molding material as claimed in claim 1, wherein the polybutadiene is grafted during the solution or mass polymerization of the polymer matrix.

7. A process for the preparation of a molding material as claimed in claim 1, wherein two ABS molding materials, each of which is prepared by solution or mass polymerization, and the first of which contains rubber particles having a mean particle size of from 100 to 500 nm, but not 500 nm, and the second contains rubber particles having a mean particle size of from 600 to 10,000 nm, are mixed with one another in the melt.

8. A process as claimed in claim 7, wherein two ABS molding materials prepared by solution or mass polymerization are mixed in the form of granules and are melted together.

## Revendications

1. Matière de moulage résistante aux chocs, modifiée par du caoutchouc, contenant, par rapport à la somme de A, de B1 et de 82,
A : 70 à 98 % en poids d'une matrice polymère A, formée par polymérisation, initiée par voie radicalaire, d'un mélange de 60 à 90 % en poids de styrène et de 10 à 40 % en poids d'acrylonitrile, et
B1 : 1 à 29 % en poids d'un premier copolymère greffé B1 particulaire distribué dans la matrice, constitué d'une base de greffage de polybutadiène et de ramifications greffées d'un copolymère de styrène et d'acrylonitrile avec une granulométrie moyenne d'environ 100 à 500 nm, la granulométrie de 500 nm étant exclue, et
B2 : 1 à 29 % en poids d'un deuxième copolymère greffé B2 particulaire distribué dans la matrice, constitué d'une base de greffage de polybutadiène et de ramifications greffées d'un copolymère de styrène et d'acrylonitrile avec une granulométrie moyenne de 600 à 10.000 nm,
sous condition que les deux copolymères greffés B1 et B2 aient été préparés en solution ou en masse et incorporés d'une manière courante dans la matrice polymère et qu'on a respecté une température de réaction inférieure à 90°C lors de la formation du copolymère greffé B1 jusqu'à l'inversion de phase en utilisant des initiateurs radicalaires suffisamment instables.

2. Matière de moulage selon la revendication 1, caractérisée en ce que les deux copolymères greffés B1 et B2 sont présents dans un rapport quantitatif qui correspond à un rapport massique des fractions respectives de polybutadiène de 60 : 40 à 99 : 1.

3. Matière de moulage selon la revendication 1, caractérisée en ce que la teneur totale en polybutadiène s'élève à 5 à 30 % en poids par rapport à la matrice polymère.

4. Matière de moulage selon la revendication 1, contenant au moins un constituant de matrice D compatible supplémentaire.

5. Matière de moulage selon la revendication 1, caractérisée en ce que la base de greffage du caoutchouc est un polybutadiène polymérisé par voie anionique.

6. Matière de moulage selon la revendication 1, caractérisée en ce que le polybutadiène est greffé pendant la polymérisation en solution ou en masse de la matrice polymère.

7. Procédé de préparation de matières de moulage selon la revendication 1, caractérisé en ce que deux matières de moulage ABS polymérisées individuellement en solution ou en masse sont mélangées ensemble en fusion, dont la première contient des particules de caoutchouc présentant une granulométrie moyenne de 100 à 500 nm, la granulométrie de 500 nm étant exclue, et la deuxième contient des particules de caoutchouc présentant une granulométrie moyenne de 600 à 10.000 nm.

8. Procédé selon la revendication 7, caractérisé en ce que deux matières de moulage ABS polymérisées respectivement en solution ou en masse sont mélangées sous forme de granulés et fondues ensemble.
